# EUROPÄISCHE PATENTSCHRIFT

(11) **EP 0 480 263 B1**
(45) Veröffentlichungstag und Bekanntmachung des Hinweises auf die Patenterteilung: **08.06.1994**
(21) Anmeldenummer: 91116534.8
(22) Anmeldetag: 27.09.1991
(51) Int. Cl.: E21B 10/48, E21B 10/60, B28D 1/04, B23B 51/04

(54) **Hohlbohrwerkzeug**
Core drill bit
Trépan carottier

(30) Priorität: 06.10.1990 DE 4031755
(43) Veröffentlichungstag der Anmeldung: 15.04.1992
(73) Patentinhaber: ROBERT BOSCH GMBH, 70442 Stuttgart (DE)
(72) Erfinder: Kuhlmann, Gerhard, Ing., W-7000 Stuttgart 30 (DE)

(56) Entgegenhaltungen:
- US-A- 2 096 056

## Beschreibung

### Stand der Technik

Die Erfindung geht aus von einem Hohlbohrwerkzeug nach dem Oberbegriff des Anspruchs 1. Aus der DE-OS 29 13 501 ist bereits eine Hohlbohrkrone bekannt, die zum Absaugen des Bohrkleins bis an die Kronenschneide heranreichende Saugkanäle aufweist. Diese Kanäle sind als Bohrungen in der Bohrkronenwand ausgebildet. Dies erfordert einen relativ hohen Fertigungsaufwand, der umso größer ist, je mehr Saugkanäle vorgesehen sind. Das Zuführen von Spülmittel ist bei der bekannten Bohrkrone nicht möglich.

Die US-A-2.096.056 beschreibt ein Hohlbohrwerkzeug mit einem rohrförmigen Tragkörper, der vollständig in eine im Bohrloch befindliche Bohrflüssigkeit eintaucht. Der Tragkörper weist Kanäle zur Zufuhr von Druckluft auf, die zur Reinigung von Arbeitsschneiden des Bohrwerkzeuges dient. Das Absaugen von Bohrklein ist bei diesem Bohrwerkzeug nicht vorgesehen.

### Vorteile der Erfindung

Das erfindungsgemäße Hohlbohrwerkzeug mit den kennzeichnenden Merkmalen des Anspruchs 1 hat demgegenüber den Vorteil, daß bei wesentlich vereinfachter Fertigung sowohl die Zuführung von Spülmittel, als auch die Absaugung von Bohrklein vorgesehen ist, was einen größeren Bohrfortschritt ermöglicht. Dieser resultiert aus einer relativ schmalen Schnittbreite und einer verbesserten Ausspülung des Schnitts, was durch einen Trägerkörper aus zwei ineinandergesteckten becherförmigen Teilen erreicht wird, von denen ein innerer Teil einen mäanderförmigen Querschnitt aufweist, ein äußerer Teil hohlzylindrisch ausgebildet ist. Aufgrund des mäanderförmigen Querschnittes des inneren Teils bilden sich einerseits zwischen dem inneren Teil und dem äußeren Teil äußere, radial geschlossene Kanäle, sowie andererseits innere, teilweise durch das zu bearbeitende Material geschlossene, aber ansonsten nach innen offene Kanäle. Die äußeren Kanäle werden vorzugsweise für die Versorgung mit Spülmittel verwendet. Der große Querschnitt der Kanäle ermöglicht insbesondere die wirkungsvolle Anwendung von Luft als Spülmittel zum Trockenbohren. Die inneren Kanäle eignen sich besonders zur Abfuhr des Bohrkleins.

Durch die in den abhängigen Ansprüchen aufgeführten Maßnahmen sind vorteilhafte Weiterbildungen und Verbesserungen des im Anspruch 1 angegebenen Hohlbohrwerkzeugs möglich. Besonders vorteilhaft ist eine Ausführung, bei der der innere Teil des Tragkörpers mit seinem Rand axial über den äußeren Rand hinausragt und derart mäanderförmig geprägt ist, daß sich der innere Rand radial über die Kontur des Tragkörpers hinaus erstreckt. Die Schneidkörper befinden sich bei dieser Bauart lediglich am inneren Teil des Tragkörpers, der besonders vorteilhaft lösbar mit dem übrigen Tragkörper verbunden sein kann. Dies ermöglicht ein rasches und kostengünstiges Austauschen des verschleißenden Werkzeugteils. Die Schneidmittel können auf besonders kostengünstige Weise galvanisch mittels eines Bindemetalls mit dem Tragkörper verbunden sein. Die geringe Wandstärke von 0,5 mm der becherförmigen Teile ermöglicht eine besonders dünnwandige Bohrkrone, was zu einer Verminderung des Schneidvolumens führt.

### Zeichnung

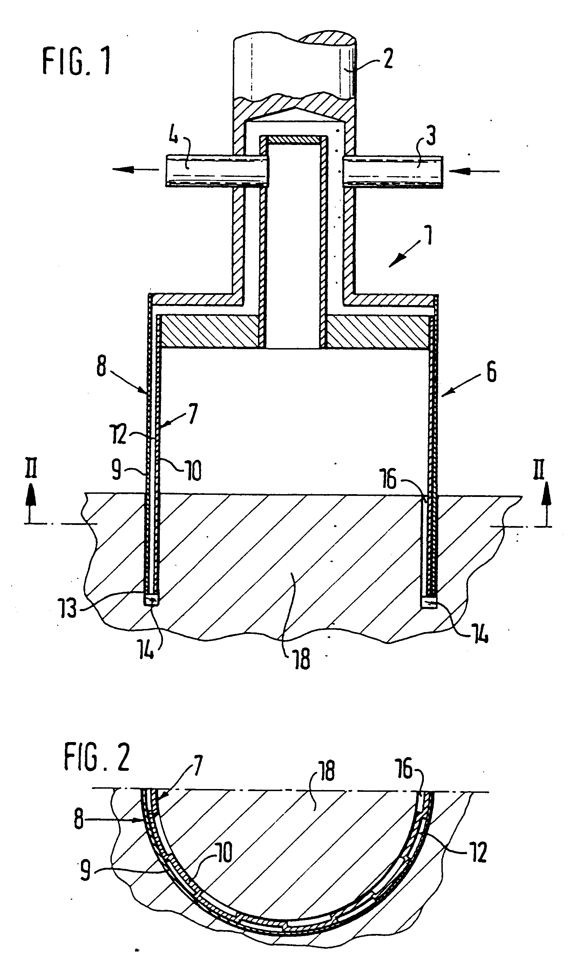

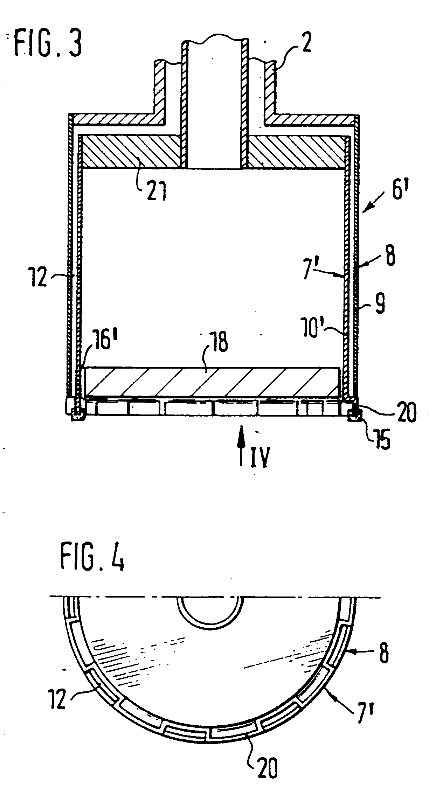

Zwei Ausführungsbeispiele der Erfindung sind in der Zeichnung dargestellt und in der nachfolgenden Beschreibung näher erläutert. Figur 1 zeigt ein erfindungsgemäßes Hohlbohrwerkzeug im Längsschnitt, Figur 2 zeigt einen Querschnitt II-II in Figur 1, Figur 3 zeigt ein zweites Ausführungsbeispiel und Figur 4 eine Draufsicht gemäß Pfeil IV in Figur 3 ohne Schneidmittel.

### Beschreibung der Ausführungsbeispiele

Ein Hohlbohrwerkzeug 1 weist einen Spannschaft 2 zum Einspannen in ein Bohrfutter oder eine Werkzeugaufnahme einer vorzugsweise als Handwerkzeugmaschine ausgestalteten Bohrmaschine auf. Der Schaft 2 ist zumindest teilweise hohl ausgebildet und weist eine Zuleitung 3 zur Zufuhr von Spülmittel, z. B. Wasser oder Druckluft und eine Abfuhrleitung 4 zur Ableitung von Bohrmehl und verbrauchtem Spülmittel auf. Die Leitungen 3 und 4 sind nur schematisch dargestellt, sie können beispielsweise auch innerhalb des Spannschaftes bis zu einer anderen geeigneten Kupplung oder zu einem an sich zum Beispiel aus der DE-PS 30 04 077 bekannten Spülkopf geführt sein. Der Inhalt der DE-PS 30 04 077 gehört zum Offenbarungsgehalt dieser Anmeldung. Auf den Spannschaft 2 ist ein becherförmiger Tragkörper 6 aufgesetzt, der aus zwei ineinander gesteckten Teilen, einem inneren Teil 7 und einem äußeren Teil 8 besteht. Zum leichteren Anbohren kann mittig in den Tragkörper 6 ein nicht gezeigter, über die Teile 7, 8 axial hervorstehender Zentrierbohrer eingesetzt sein. Die beiden Teile 7, 8 können jeweils zweistückig aus einem Boden und einem Mantel gebildet sein. Der Mantel des äußeren Teils 8 ist als glatter Zylindermantel 9 ausgebildet. Der Mantel 10 des inneren Teils 7 ist in Umfangsrichtung mäanderförmig gewellt, und liegt teilweise in dem äußeren Zylindermantel 9 unter Bildung von geschlossenen Kanälen 12 an, die sich parallel zu einer Mantellinie erstrecken. Die Kanäle 12 stehen mit der Zuleitung 3 in Verbindung. Die Kanäle 12 erstrecken sich bis zum stirnseitigen vorderen Rand 13 des Tragkörpers 6 und enden dort offen. An dem vorderen Rand 13 sind Schneidmittel 14, insbesondere Diamanten, Hartmetallstücke oder Hartmetalleinsätze befestigt. Es können auch die Stirnseiten beider Teile 7 und 8 mit einem Überzug aus in einem Bindemetall teilweise eingebetteten Diamantkörnern versehen sein, wie dies im zweiten Ausführungsbeispiel gezeigt ist. Es bildet sich damit ein über den gesamten Umfang des Randes 13 erstreckender Kranz 15 von Schneidkörpern. Die Diamanten oder auch andere Schleifkörper kleiner Korngröße können kostengünstig in einem elektrolytischen Bad galvanisch auf den Trägerkörper 6 aufgebracht werden. Dies ergibt eine etwa dreimal größere Schnittlänge gegenüber den aus dem Stand der Technik bekannten Diamantsegmenten, was den Arbeitsfortschritt wesentlich erhöht. Außerdem erhöht der geschlossene Kranz 15 die Steifigkeit und Schwingungssteifigkeit des Werkzeugs.

Innerhalb des Tragkörpers 6 sind gemäß Figur 2 alternierend zu den Kanälen 12 offene Kanäle 16 gebildet, die in Verbindung mit der Abfuhrleitung 4 stehen. Über die Kanäle 16 kann Bohrklein und Spülmittel abgesaugt werden. Da beim Bohren in Gestein oder in eine Wand gewöhnlich ein Bohrkern 18 in der Mitte des Tragkörpers 6 stehen bleibt, werden die Kanäle 16 zumindest in ihrem vorderen Bereich nach innen durch den Bohrkern 18 abgeschlossen. Sowohl die Kanäle 12 als auch die Kanäle 16 haben zusammengenommen eine große Querschnittsfläche, so daß die Spülmittelzufuhr und die Spanabfuhr gegenüber herkömmlichen Werkzeugen erheblich verbessert ist. Die Wandstärke sowohl des inneren Teils 7 als auch des äußeren Teils 8 beträgt vorzugsweise nur 0,5 mm, so daß der gesamte Tragkörper 6 nur eine Wandstärke von etwa 1,5 mm aufweist. Dies führt zu einer sehr geringen Schnittbreite und damit zu einem hohen möglichen Bohrfortschritt.

Das zweite Ausführungsbeispiel gemäß Figur 3 und 4 entspricht im wesentlichen dem ersten. Gleiche Teile sind mit gleichen Bezugszahlen versehen. Der Tragkörper 6′ weist neben einem äußeren Teil 8 einen inneren Teil 7′ auf, der axial über den äußeren Teil 8 hinaussteht. Ein dem Schaft 2 abgewandter Rand 20 des inneren Teils 7′ ist mäanderförmig in der Weise geprägt, daß zumindest der Schleifmittelkranz 15 sich radial über die Kontur der beiden Teile 7′, 8 des Tragkörpers hinaus erstreckt (siehe Figur 4). Der seitlich überstehende Kranz 15 stellt sicher, daß die Mäntel 9, 10′ nicht mit dem Gestein in Berührung kommen und daß sich zwischen dem inneren Mantel 10′ und dem Bohrkern 18 ein zylindermantelförmiger Kanal 16′ zur Abfuhr des Bohrkleins bildet. Auch der innere Teil 7′ bildet einen Mantel 10′, der genau wie im ersten Ausführungsbeispiel mäanderförmig, ebenso gut aber auch glattwandig ausgebildet sein kann. Schneidmittel 14, ob als Überzug oder als Hartmetalleinsätze ausgebildet, befinden sich lediglich an dem Rand 20 des inneren Teils 7′ nicht aber an dem äußeren Teil 8 des Tragkörpers.

Zumindest der Rand 20 mit den Schneidmitteln 14, vorzugsweise jedoch der ganze innere Teil 7′ ist lösbar mit dem übrigen Tragkörper 6′ verbunden, so daß dieser bei Verschleiß leicht ausgewechselt werden kann. Der innere Mantel 10′ kann beispielsweise mittels eines Gewindes an einem Bodenteil 21 befestigt sein. Eine Schraub- oder auch eine Bajonettverbindung kann jedoch auch an anderer Stelle zwischen dem inneren Teil 7′ und dem übrigen Tragkörper 6′ angeordnet sein.

## Patentansprüche

1. Hohlbohrwerkzeug mit einem Einspannschaft (2) und einem rohrförmigen Tragkörper (6, 6′), der Kanäle (12, 16) zum Absaugen von Bohrklein aufweist und an dessen in Vorschubrichtung vorderem Rand (13, 20) Schneidmittel (14) angebracht sind, dadurch gekennzeichnet, daß der Tragkörper (6, 6′) aus zwei becherförmigen, ineinandergesteckten Teilen (7, 7′,8) besteht, zwischen denen wenigstens einer der Kanäle (12, 16) gebildet ist und daß ein innerer Teil (7, 7′) des Tragkörpers (6, 6′) aus Zylindersegmenten mit größerem Durchmesser und Zylindersegmenten mit kleinerem Durchmesser besteht, die durch etwa radial verlaufende Abschnitte verbunden einen mäanderförmigen Querschnitt ergeben.

2. Hohlbohrwerkzeug nach Anspruch 1, dadurch gekennzeichnet, daß der innere Teil (7, 7′) mit einem äußeren Teil (8) des Tragkörpers (6, 6′) in radialer Richtung geschlossene Kanäle (12) bildet.

3. Hohlbohrwerkzeug nach Anspruch 2, dadurch gekennzeichnet, daß der innere Teil (7, 7′) des Tragkörpers (6, 6′) lösbar mit dem übrigen Tragkörper (6, 6′) verbunden ist.

4. Hohlbohrwerkzeug nach Anspruch 1, 2 oder 3, dadurch gekennzeichnet, daß innerhalb des inneren Teils (7, 7′) des Tragkörpers (6, 6′) nach innen offene Kanäle (16) vorzugsweise zum Absaugen von Bohrklein gebildet sind.

5. Hohlbohrwerkzeug nach Anspruch 1, dadurch gekennzeichnet, daß der innere Teil (7′) des Tragkörpers (6′) mit seinem vorderen, dem Schaft (2) abgewandten Rand (20) über den äußeren Teil (8) axial hinausragt und derart maänderförmig geformt ist, daß sich ein am Rand (20) angeordneter, mit Schneidmitteln (14) besetzter Kranz (15) radial über die Kontur der beiden Teile (7′, 8) des Tragkörpers (6′) hinaus erstreckt.

6. Hohlbohrwerkzeug nach einem der vorhergehenden Ansprüche, dadurch gekennzeichnet, daß als Schneidmittel (14) Diamanten (oder Hartmetallstücke) dienen, die über den ganzen Umfang des Randes (13, 20) verteilt kranzförmig auf dem Tragkörper (6, 6′) angebracht sind.

7. Hohlbohrwerkzeug nach Anspruch 6, dadurch gekennzeichnet, daß die Schneidmittel (14) mittels eines Bindemetalls vorzugsweise galvanisch mit dem Tragkörper (6, 6′) verbunden sind.

8. Hohlbohrwerkzeug nach einem der vorhergehenden Ansprüche, dadurch gekennzeichnet, daß die Wandstärke der becherförmigen Teile (7, 7′, 8) gering ist und etwa 0,5 mm beträgt.

## Claims

1. Trepanning tool having a clamping shank (2) and a tubular carrier body (6, 6′) which is provided with ducts (12, 16) for sucking off drillings and at whose front edge (13, 20), viewed in the feed direction, cutting means (14) are disposed, characterized in that the carrier body (6, 6′) consists of two cup-shaped parts (7, 7′, 8) fitted one into the other and between which at least one of the ducts (12, 16) is formed, and in that an inner part (7, 7′) of the carrier body (6, 6′) consists of cylinder segments having a larger diameter and cylinder segments having a smaller diameter, said segments being joined by approximately radially extending portions and forming a meander-shaped cross-section.

2. Trepanning tool according to Claim 1, characterized in that the inner part (7, 7′) together with an outer part (8) of the carrier body (6, 6′) forms ducts (12) closed in the radial direction.

3. Trepanning tool according to Claim 2, characterized in that the inner part (7, 7′) of the carrier body (6, 6′) is detachably connected to the remainder of the carrier body (6, 6′).

4. Trepanning tool according to Claims 1, 2 or 3, characterized in that ducts (16) open on the inside, preferably for sucking off drillings, are formed inside the inner part (7, 7′) of the carrier body (6, 6′).

5. Trepanning tool according to Claim 1, characterized in that the front edge (20), remote from the shank (2), of the inner part (7′) of the carrier body (6′) projects axially beyond the outer part (8) and is meander-shaped in such a manner that a rim (15) arranged on the edge (20) and equipped with cutting means (14) extends radially beyond the contour of the two parts (7′, 8) of the carrier body (6′).

6. Trepanning tool according to one of the preceding claims, characterized in that the cutting means (14) are diamonds (or hard metal pieces) which are disposed in a circle on the carrier body (6, 6′) and distributed over the entire circumference of the edge (13, 20).

7. Trepanning tool according to Claim 6, characterized in that the cutting means (14) are joined by means of a binder metal, preferably by electrodeposition, to the carrier body (6, 6′).

8. Trepanning tool according to one of the preceding claims, characterized in that the wall thickness of the cup-shaped parts (7, 7′, 8) is slight, amounting to approximately 0.5 mm.

## Revendications

1. Trépan carottier comprenant un arbre de montage (2), un corps tubulaire (6, 6′), des canaux (12, 16) d'aspiration des débris de découpe, des organes de coupe (14) montés sur son bord (13, 20) situé en avant par rapport au sens d'avancement de l'outil caractérisé en ce que le corps (6, 6′) est constitué de deux parties (6, 6′) en forme de coupelles, emboîtées l'une dans l'autre en formant entre elles au moins un des canaux (12, 16), tandis que la partie interne (7, 7′) du corps (6, 6′) est constituée d'éléments cylindriques de deux diamètres différents, reliés par des parties au moins sensiblement radiales dessinant une section en forme de méandre.

2. Trépan carottier selon la revendication 1, caractérisée en ce que la partie interne (7, 7′) délimite, avec la partie externe (8) du corps (6, 6′) des canaux fermés dans le sens radial.

3. Trépan carottier selon la revendication 2, caractérisé en ce que la partie interne (7, 7′) du corps (6, 6′) est reliée de manière amovible au reste du corps (6, 6′).

4. Trépan carottier selon la revendication 1, 2 ou 3, caractérisé en ce qu'il comporte, à l'intérieur de la partie interne (7, 7′) du corps (6, 6′) des canaux (16) ouverts vers l'intérieur et destinés de préférence à l'aspiration des débris de découpe.

5. Trépan carottier selon la revendication 1, caractérisé en ce que la partie interne (7′) du corps (6′) dépasse axialement, par son bord (20) antérieur situé à l'opposé de l'arbre (2), la partie externe (8) et présente en forme de méandres dessinant, le long du bord (20), une couronne (15) équipée d′organes de coupe (14) et débordant radialement l'enveloppe externe des deux parties (7′, 8) du corps (6′) de l′outil.

6. Trépan carottier selon l'une des revendications précédentes, caractérisé en ce que les organes de coupe (14) sont des diamants (ou des morceaux de métal dur), répartis sur toute la longueur du bord (13, 20) en formant une couronne sur le corps (6, 6′) de l'outil.

7. Trépan carottier selon la revendication 8, caractérisé en ce que les organes de coupe (14) sont de préférence fixés, par électrolyse, par l'intermédiaire d'un métal de liaison, au corps de l'outil (6, 6′).

8. Trépan carottier selon l'une des revendications précédentes, caractérisé en ce que l'épaisseur de paroi de chacune des pièces (7, 7′, 8) en forme de coupelle est faible, de l'ordre de 0,5 mm.
